## Europäisches Patentamt

## European Patent Office

## Office européen des brevets

(19)

(11) Veröffentlichungsnummer: **0 257 051**
**B1**

(12)

# EUROPÄISCHE PATENTSCHRIFT

(45) Veröffentlichungstag der Patentschrift:
03.05.89

(51) Int. Cl.⁴: **B 64 D 11/00**

(21) Anmeldenummer: **87901029.6**

(22) Anmeldetag: **14.02.87**

(86) Internationale Anmeldenummer:
**PCT/DE 87/00052**

(87) Internationale Veröffentlichungsnummer:
**WO 87/04990 (27.08.87 Gazette 87/19)**

(54) **PACKSACK UND DESSEN ANORDNUNG ZUM ZUGRIFFSBEREITEN AUFBEWAHREN EINER SCHWIMMWESTE, VORZUGSWEISE IN EINEM FLUGZEUG.**

(30) Priorität: **15.02.86 DE 3604857**

(43) Veröffentlichungstag der Anmeldung:
**02.03.88 Patentblatt 88/9**

(45) Bekanntmachung des Hinweises auf die Patenterteilung:
**03.05.89 Patentblatt 89/18**

(84) Benannte Vertragsstaaten:
**FR GB NL**

(56) Entgegenhaltungen:
**EP-A- 0 147 376**
**US-A- 4 481 945**

(73) Patentinhaber: **MESSERSCHITT-BÖLKOW-BLOHM GMBH, Abt. TM 43 BRE Hünefeldstrasse 1-5, D-2800 Bremen (DE)**

(72) Erfinder: **BECKER, Reinhard, Jevenstedter Str. 53, D-2000 Hamburg 53 (DE)**
Erfinder: **JANSA, Bruno, Bullertweg 3, D-2102 Hamburg 93 (DE)**

ACTORUM AG

## Beschreibung

Die Erfindung bezieht sich auf einen Packsack nach dem Oberbegriff des Anspruchs 1.

Ein bekannter Packsack dieser Art ist unter jedem Passagiersitz eines Flugzeuges angeordnet. Falls die Schwimmweste benutzt werden soll, muss der Passagier die in dem Packsack befindliche Schwimmweste aus dem unterhalb des Sitzes befindlichen Stauraum herausnehmen und den Packsack öffnen, bevor er die Schwimmweste entnehmen und anlegen kann. Der Packsack besteht aus einem Gewebe oder einer Kunststoff-Folie und ist zwecks staubfreier Lagerung der Schwimmweste durch Nähen oder Schweissen verschlossen, wobei die betreffenden Nähte jedoch ohne grossen Kraftaufwand geöffnet werden können. Dennoch wirkt sich hierbei ungünstig aus, dass zum Auspacken einer Schwimmweste mehrere nur mit beiden Händen ausführbare Handgriffe erforderlich sind. Hierdurch werden Behinderte benachteiligt. Ausserdem besteht im Notfall die Gefahr, dass weniger Geschickte in Panik geraten, wenn ihnen das reibungslose Auspacken der Schwimmweste nicht sofort gelingt. Ein weiterer Nachteil dieser Lösung besteht darin, dass es hierbei sehr leicht ist, Schwimmwesten unbemerkt zu entwenden.

Bei einer anderen bekannten Lösung, wodurch das unbemerkte Entwenden von Schwimmwesten verhindert werden soll, sind diese in einem Überkopf-Behälter oberhalb der Passagiersitze untergebracht, der bei Bedarf zur Entnahme der Schwimmwesten heruntergeschwenkt wird. Hierbei ist zwar die Diebstahlsicherheit infolge der Überkopfanordnung wesentlich erhöht, aber die Handhabung dieser Anordnung ist recht umständlich. Ausserdem werden durch die heruntergeschwenkten Behälter mögliche Fluchtwege eingeengt, so dass im Notfall ein einfaches Anlegen der Schwimmwesten und ein reibungsloses Verlassen des Flugzeuges nicht möglich ist.

Demgemäss liegt der Erfindung die Aufgabe zugrunde, einen gattungsgemässen Packsack derart auszubilden und anzuordnen, dass das Entnehmen und Auspacken einer Schwimmweste mit ganz wenigen, mit nur einer Hand ausführbaren Handgriffen ausführbar ist.

Durch die Erfindung wird weiterhin die Teilaufgabe gelöst, einen gattungsgemässen Packsack derart auszubilden und anzuordnen, dass ein unbemerktes Entwenden von Schwimmwesten verhindert wird.

Diese Aufgabe ist bei einem gattungsgemässen Packsack durch die kennzeichnenden Merkmale des Anspruchs 1 gelöst. Vorteilhafte Weiterbildungen der Erfindung sind in den Unteransprüchen angegeben.

Die damit erreichten Vorteile bestehen darin, dass die zum Hervorholen der Schwimmwesten erforderlichen Handgriffe erleichtert werden, wodurch ggf. Menschenleben gerettet werden können. Weiterhin zeichnet sich der erfindungsgemässe Packsack dadurch aus, dass damit ein unbemerktes Entwenden von Schwimmwesten praktisch nicht mehr möglich ist.

Die Erfindung ist anhand der Zeichnung dargestellt und in der Beispielbeschreibung näher erläutert. Es zeigen:

Fig. 1 einen Behälter 1 mit drei Packsäcken,

Fig. 2 den Behälter nach Fig. 1 im Schnitt,

Fig. 3 den Schnitt III-III nach Fig. 2,

Fig. 4 den Behälter nach Fig. 1 in geöffnetem Zustand,

Fig. 5 den Behälter nach Fig. 4 mit betätigter Reissleine,

Fig. 6 den Behälter nach Fig. 5 mit herausgeschwenktem Packsack,

Fig. 7 den Behälter nach Fig. 6 mit entnehmbarer Schwimmweste,

Fig. 8 eine Flugzeugkabine,

Fig. 9 den Schnitt IX-IX nach Fig. 8,

Fig. 10 den Schnitt X-X nach Fig. 8,

Fig. 11 einen Packsack mit einer Klammer,

Fig. 12 den Packsack nach Fig. 11 in geschwenkter Stellung, und

Fig. 13 den Packsack nach Fig. 12 mit entnahmebereiter Schwimmweste.

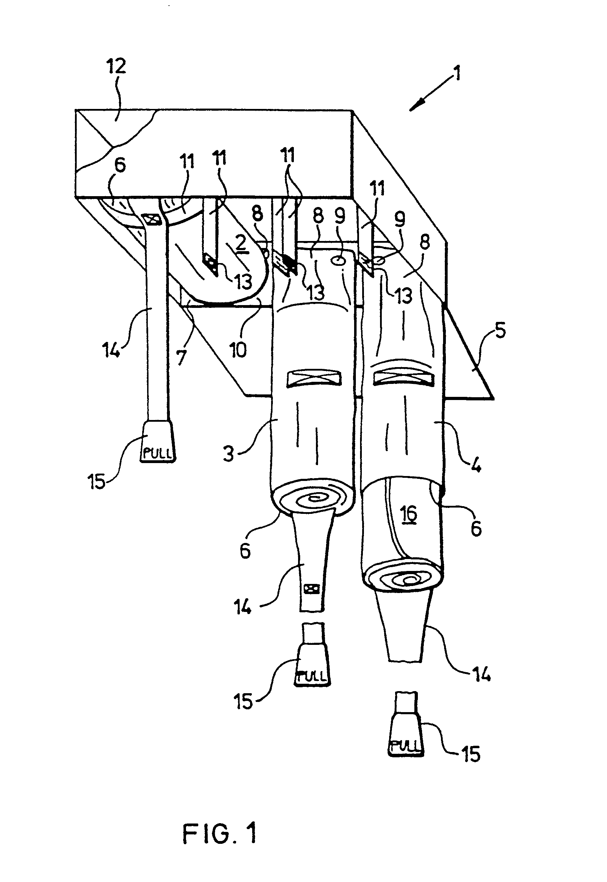

Figur 1 zeigt einen Behälter 1 mit drei Packsäcken 2, 3 und 4. Der als Überkopf-Ausführung ausgebildete Behälter 1 befindet sich oberhalb der Passagiersitze und weist an seiner Unterseite eine Klappe 5 auf. Die Packsäcke sind schlauchförmig mit einem offenen Ende 6 und einem geschlossenen Ende 7 ausgebildet. Im Notfall wird die Klappe 5 durch den betreffenden Passagier geöffnet. Danach befinden sich die zu Paketen gefalteten und gerollten Schwimmwesten in der Lage des Packsackes 2. Das geschlossene Ende eines jeden Packsackes 2, 3, 4 weist einen Lappen 8 auf, der mittels Druckknöpfen 9 an eine Innenwand 10 des Behälters 1 befestigt ist. Das jeweils offene Ende ist durch ein Halteband 11 gegen Herausfallen gesichert. Dieses Band 11 ist fest mit der oberen Wand 12 des Behälters 1 verbunden. Die freien Enden des Bandes 11 sind jeweils mit einem Flächenreissverschluss 13 versehen und über eine Reissleine 14 miteinander verbunden, die an der betreffenden Stelle ein entsprechendes Reissverschluss-Gegenstück aufweist. Sobald die Klappe 5 geöffnet ist, fällt die Reissleine 14 mit dem Handgriff 15 aus dem Behälter 1 heraus und nimmt die in Verbindung mit dem Packsack 2 gezeigte Lage ein und befindet sich damit im Zugriffsbereich des Passagiers, dem die betreffende Schwimmweste zugeordnet ist. Durch Ziehen der Reissleine 14 werden die Reissverschlüsse 13 geöffnet, so dass der betreffende Packsack aus dem Behälter 1 herausschwenkt und die Lage gemäss Packsack 3 einnimmt. In dieser Stellung kann die zusammengewickelte Schwimmweste 16 trotz des unten offenen Packsackes aufgrund der Reibung nicht aus diesem herausfallen. Erst durch weiteres Ziehen der Reissleine 14 bis zu einer definierten Endlage wird die Schwimmweste 16 aus dem Packsack 4 bis zu der durch die Reissleine 14 bestimmten Endlage herausgezogen, wie dies anhand des Sakkes 4 gezeigt ist. Jetzt kann die Schwimmweste 16 durch Anfassen an deren freiem unverpacktem Ende völlig aus dem Packsack herausgezogen werden. Alle nach dem Öffnen der Klappe 5 erforderlichen Handgriffe sind leicht mit einer Hand auszuführen.

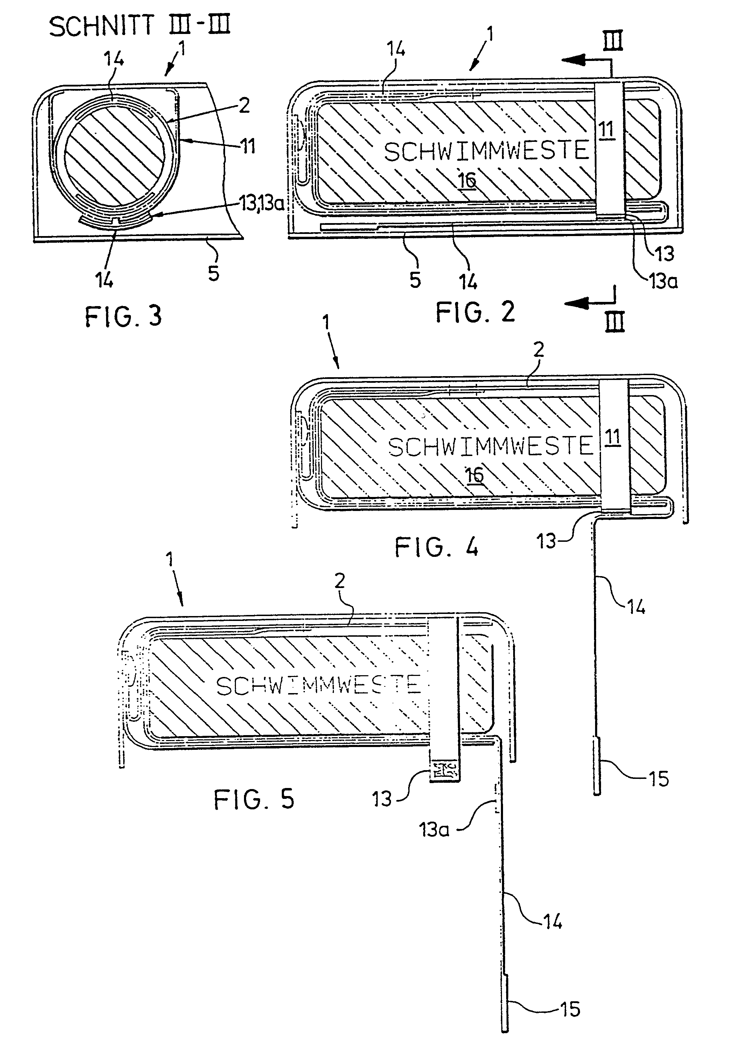

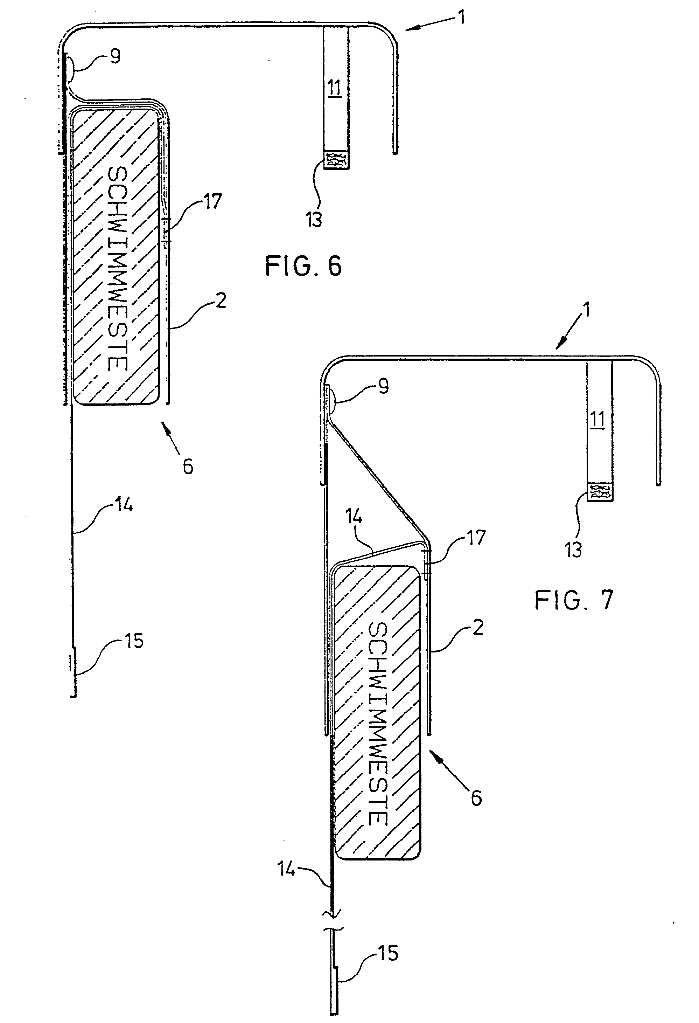

Die Figuren 2 bis 7 zeigen beispielhaft anhand eines Packsackes 2 dessen erfindungsgemässe Anordnung mit einem Behälter 1. In Fig. 2 ist der Behälter 1 in Normallage mit geschlossener Klappe 5 gezeigt. Hier ist der Behälter längs des Packsackes 2 geschnitten, so dass dieser in der Ansicht erscheint. Die Reissleine 14 befindet sich im Inneren des Behälters 1 und der Flächenreissverschluss 13 mit dessen Gegenstück 13a ist geschlossen. Fig. 3 zeigt den infolge der aufgewickelten Schwimmweste im Prinzip kreisförmigen Querschnitt des gefüllten Packsackes 2. In Fig. 4 ist die hier nicht mehr gezeigte Klappe 5 geöffnet. Die Reissleine 14 hängt nach unten. Der Reissverschluss 13/13a ist noch geschlossen, so dass die Lage der Schwimmweste 16 unverändert ist. Sobald der Reissverschluss 13/13a durch Ziehen der Reissleine 14 geöffnet ist, wie in Fig. 5 gezeigt, schwenkt der Packsack 2 aus dem Behälter 1 heraus und nimmt die in Fig. 6 gezeigte Lage ein. Da der Packsack 2 die Schwimmweste 16 eng umschliesst, kann diese nicht aus dem Packsack 2 herausfallen. Die Reissleine 14 ist innerhalb des Packsackes 2 um das obere Ende des Schwimmwestenwickels herumgeführt und etwa in der Mitte der Längserstreckung des Packsackes 2 an der Stelle 17 mit dem Packsack 2 vernäht. Durch weiteres Ziehen der Reissleine 14 wird der Wickel 16 praktisch von dessen oberem Ende her aus dem Packsack herausgeschoben, bis er die durch die Nahtstelle 17 bestimmte, in Fig. 7 gezeigte Endlage erreicht hat. Jetzt kann die Schwimmweste 16 durch Anfassen an deren unterem Ende völlig aus dem Packsack 2 herausgezogen werden. Da die Klappe 5 dicht schliesst und das offene Ende 6 des Packsackes eng an der betreffenden Wand des Behälters 1 anliegt, ist die Schwimmweste 16 hinreichend staubdicht gelagert.

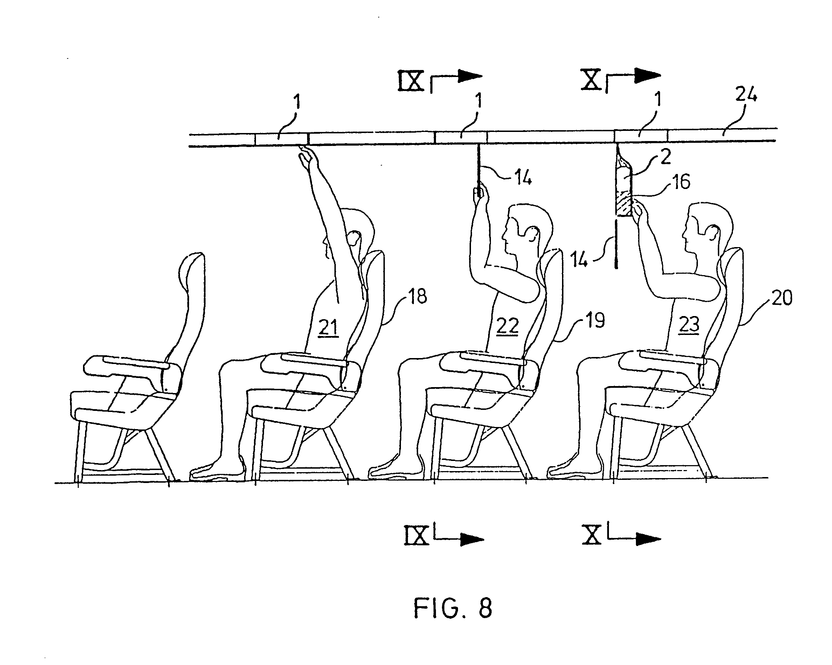

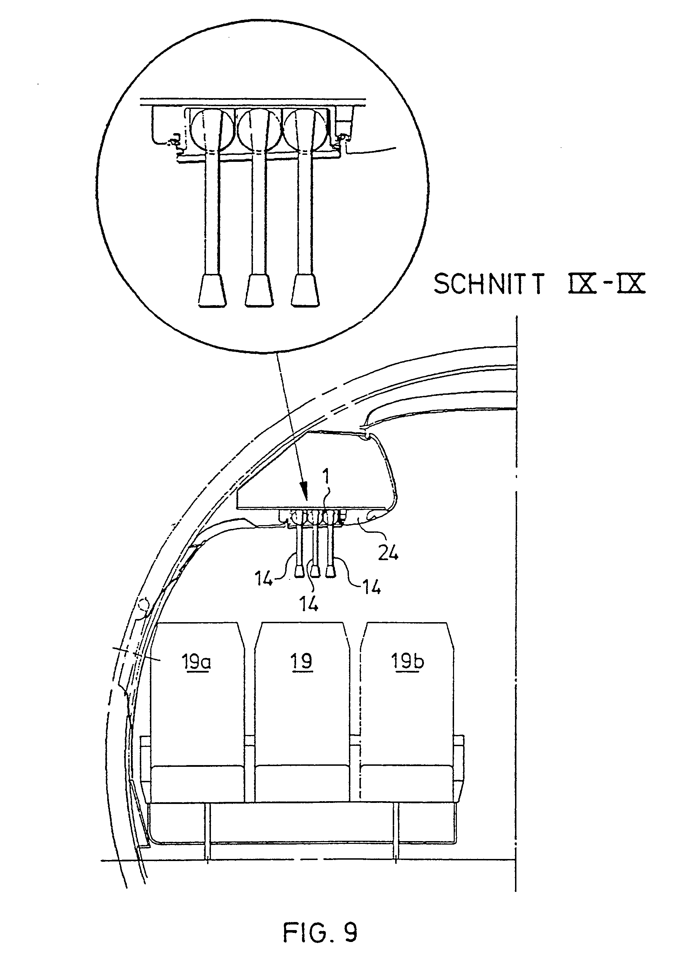

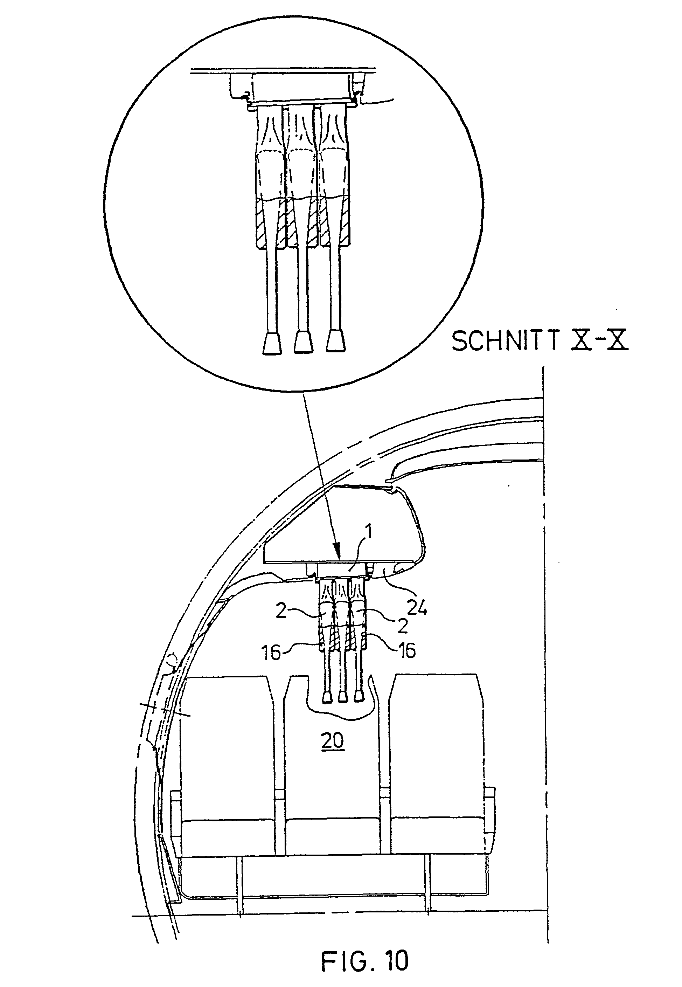

Die Figuren 8 bis 10 zeigen eine Flugzeugkabine mit Passagiersitzen 18, 19, 20 und Passagieren 21, 22, 23. Die Überkopf-Behälter 1 sind innerhalb einer Verkleidung 24 angeordnet. Wie anhand des Passagiers 21 erkennbar, befindet sich der jeweilige Behälter 1 innerhalb der Reichweite des betreffenden Passagiers. Der oberhalb des Passagiers 22 angeordnete Behälter 1 ist geöffnet. Die Klappe 5 ist der Einfachheit halber nicht gezeigt. Die gut sichtbare Reissleine kann von dem betreffenden Passagier 22 mit einer Hand gezogen werden. Anhand des Passagiers 23 ist gezeigt, wie die Schwimmweste 16 dem Packsack 2 entnommen wird, nachdem die Reissleine bis zum Anschlag gezogen wurde. Der Schnitt gemäss Fig. 9 zeigt die Anordnung des Behälters 1 in bezug auf die Kabinenquerrichtung.

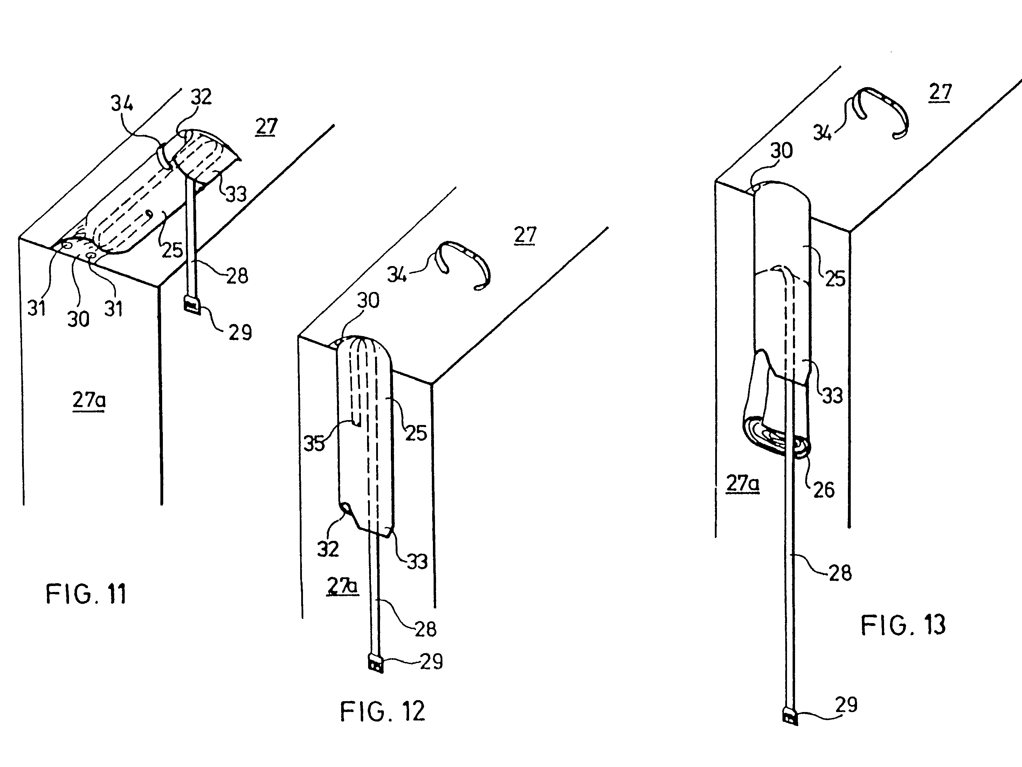

Die Figuren 11 bis 13 zeigen eine andere Ausgestaltung eines einzelnen Packsackes 25 für eine Schwimmweste 26, der in einer aus einer horizontalen Decke 27 und einer vertikalen Wand 27a gebildeten Ecke in eines Luft oder Wasserfahrzeuges angeordnet ist. Fig. 11 zeigt die Anordnung in einsatzbereitem Zustand, wobei das geschlossene Ende des Packsackes 25 einen Lappen 30 bildet, der durch zwei Schrauben 31 an der Wand 27 befestigt ist. Das offene Ende 32 ist durch eine an der Wand 27 befestigte aus einem elastischen Material bestehende Klammer 34 in horizontaler Lage gehalten. Die Reissleine 28 mit dem Handgriff 29 hängt griffbereit nach unten. Durch Ziehen der Reissleine 28 wird die Lasche 33 geöffnet und der Packsack 25 aus der Klammer 34 gelöst. Hierdurch schwenkt der Packsack 25 nach unten nimmt die Lage gemäss Fig. 12 ein. Da der Packsack 25 die Schwimmweste relativ fest umschliesst, kann diese infolge der bestehenden Reibung nicht aus dem Packsack 25 herausfallen. Die Reissleine 28 ist innerhalb des Packsackes 25 wieder um das obere Ende der Schwimmweste 26 herumgeführt, so dass diese durch weiteres Ziehen der Reissleine 28 die in Fig. 13 gezeigte Lage einnimmt, um dann völlig aus dem Packsack 25 herausgezogen zu werden. Die vorgenannte Ausgestaltung ist nicht an einen Behälter gebunden, so dass die Packsäcke 25 mit den Schwimmwesten 26 je nach Erfordernis einzeln oder in Gruppen angeordnet werden können. Dabei kann der Lappen 30 mittels der Schrauben 31 auch an der vertikalen Wand 27a befestigt sein. Anstelle der Druckknöpfe 9 bzw. der Schrauben 31 sind auch andere Befestigungselemente, wie Schnellverschlüsse, Spreizniete od. dgl. denkbar.

## Patentansprüche

1. Packsack (2, 3, 4, 25) zum zugriffsbereiten Aufbewahren einer Schwimmweste (16, 26), vorzugsweise in einem Flugzeug, gekennzeichnet, durch eine im wesentlichen schlauchförmige Ausbildung des Packsackes mit einem offenen Ende (6, 32) und einem geschlossenen Ende (7) wobei das geschlossene Ende (7) einen Lappen (8, 30) zur Aufnahme mindestens eines Befestigungselementes (Druckknopf 9, Schraube 31) bildet und eine Reissleine (14, 28) an der Innenseite des Packsackes, etwa in der Mitte der Längserstreckung des Packsackes (2, 3, 4, 25) an einer Stelle (17, 35) befestigt und von hier aus um das dem offenen Ende (6, 32) des Packsackes (2, 3, 4, 25) abgewandte Ende der zusammengelegten Schwimmweste (16, 26) herum entlang der Innenfläche des Packsackes (2, 3, 4, 25) durch das offene Ende (6, 32) nach aussen geführt ist.

2. Packsack nach Anspruch 1, gekennzeichnet durch eine Passform, wodurch die Schwimmweste (16, 26) in vertikaler Lage des mit dem offenen Ende (6, 32) nach unten hängenden Packsackes (2, 3, 4, 25) durch Reibung sicher gehalten wird.

3. Packsack nach Anspruch 1 oder 2, dadurch gekennzeichnet, dass eine Lasche (33) zum Verschliessen des offenen Endes (6, 32) des Packsackes (2, 3, 4, 25) vorgesehen ist.

4. Anordnung eines Packsackes, nach einem der Ansprüche 1 bis 3, der oberhalb von vorzugsweise in einem Flugzeug befindlichen Personen angeordnet ist, gekennzeichnet, durch einen mit einer nach unten ausschwenkbaren Klappe (5) versehenen Behälter (1) zur Aufnahme mindestens eines Packsackes (2, 3, 4, 25).

5. Anordnung nach Anspruch 4, dadurch gekennzeichnet, dass der Behälter (1) Befestigungsmittel (9, 31) für das geschlossene Ende (7) und ein Band (11) mit einem Flächenreissverschluss (13) zur Halterung des offenen Endes (6, 32) des Packsackes (2, 3, 4, 25) aufweist.

6. Anordnung nach Anspruch 4 oder 5, dadurch gekennzeichnet, dass der Behälter (1) eine Klammer (34) zur Halterung des offenen Endes (6, 32) des Packsackes (2, 3, 4, 25) aufweist.

7. Anordnung eines Packsackes nach einem der Ansprüche 1 bis 3, dadurch gekennzeichnet, dass der Packsack (2, 3, 4, 25) ohne einen Behälter direkt an einer Decke (27) und/oder einer Wand (27a) befestigt ist.

8. Anordnung nach Anspruch 7, dadurch gekennzeichnet, dass das ausschwenkbare Ende des Packsackes (2, 3, 4, 25) durch ein Band (11) an der Decke (27) oder der Wand (27a) gehalten ist.

9. Anordnung nach Anspruch 7 oder 8, dadurch gekennzeichnet, dass das ausschwenkbare Ende des Packsackes (2, 3, 4, 25) durch eine Klammer 34 gehalten ist.

## Claims

1. A pack sack (2, 3, 4, 25) for the ready-to-hand storage of a life-jacket (16, 26), preferably in an aircraft, characterized by a substantially tubularly shaped construction of the pack sack with an open end (6, 32) and a closed end (7), wherein the closed end (7) forms a flap (8, 30) for receiving at least one fastening means (press stub 9, screw 31), and wherein a rip or release cord (14, 28) is secured at one point (17, 35) on the inner side of the pack sack, substantially in the middle of the pack sack (2, 3, 4, 25) and is guided from that point around that end of the folded life-jacket (16, 26), which is remote from the open end (6, 32) of the pack sack (2, 3, 4, 25), along the inner surface of the pack sack and outwardly through the open end (6, 32).

2. A pack sack according to Claim 1, characterised by a shape such that the life-jacket (16, 26) is held securely by friction in a vertical position of the pack sack (2, 3, 4, 25) with the open end (6, 32) hanging downwardly.

3. A pack sack according to Claim 1 or 2, characterised in that a cover (33) is provided for closing the open end (6, 32) of the pack sack (2, 3, 4, 25).

4. An arrangement of a pack sack, according to any one of Claims 1 to 3, which is arranged above people who are preferably in aircraft, characterised by a container (1), for the accommodation of at least one pack sack (2, 3, 4, 25), and provided with a cover (5), which can be swung downwardly.

5. An arrangement according to Claim 4, characterised in that the container (1) has fastening means (9, 31) for the closed end (7) and a strap (11) with a rip fastener (13) for retaining the open end (6, 32) of the pack sack (2, 3, 4, 25).

6. An arrangement according to Claim 4 or 5, characterised in that the container (1) has a clamp (34) for retaining the open end (6, 32) of the pack sack (2, 3, 4, 25).

7. An arrangement of a pack sack according to any one of Claims 1 to 3, characterised in that the pack sack (2, 3, 4, 25) without a container is secured directly on a ceiling (27) and/or a wall (27a).

8. An arrangement according to Claim 7, characterised in that the end of the pack sack (2, 3, 4, 25), which end can be swung away, is held by a strap (11) on the ceiling (27) or the wall (27a).

9. An arrangement according to Claim 7, characterised in that the end of the pack sack (2, 3, 4, 25) which can be swung out is held by a clamp 34.

## Revendications

1. Paquetage (2, 3, 4, 25) pour le rangement accessible d'un gilet de sauvetage (16, 26) de préférence dans un avion, caractérisé en ce que ce paquetage est réalisé principalement en forme de tube, avec une extrémité ouverte (6, 32) et une extrémité fermée (7), l'extrémité fermée (7) formant un volet (8, 30) pour recevoir au moins un élément de fixation (bouton-pression 9, vis 31) et en ce que sur la face intérieure du paquetage, sensiblement au milieu de la longueur de ce paquetage (2, 3, 4, 25) à un endroit (17, 35) est fixée une bande d'arrachage (18, 28), et à partir de ce point cette bande est dirigée vers l'extérieur autour de l'extrémité du gilet de sauvetage (16, 26) replié, extrémité opposée à l'extrémité ouverte (6, 32) du paquetage (2, 3, 4, 25), en étant guidée le long de la surface intérieure du paquetage (2, 3, 4, 25) à travers l'extrémité ouverte (6, 32).

2. Paquetage selon la revendication 1, caractérisé par une forme adaptée pour maintenir le gilet de sauvetage (6, 26) en position verticale du paquetage (2, 3, 4, 25) dont l'extrémité ouverte (6, 32) pend vers le bas, le gilet étant maintenu sûrement par frottement.

3. Paquetage selon la revendication 1 ou 2, caractérisé par une bague (33) pour fermer l'extrémité ouverte (6, 32) du paquetage (2, 3, 4, 25).

4. Disposition d'un paquetage selon l'une des revendications 1 à 3, au-dessus de passagers notamment d'un avion, caractérisée par un réceptacle (1) muni d'un volet (5) basculant vers le bas pour recevoir au moins un paquetage (2, 3, 4, 25).

5. Disposition selon la revendication 4, caractérisée en ce que le réceptacle (1) comporte des moyens de fixation (9, 31) pour l'extrémité fermée (7) et un ruban (11) muni d'un moyen de fermeture à accrochage de surface (13) pour maintenir l'extrémité ouverte (6, 32) du paquetage (2, 3, 4, 25).

6. Disposition selon la revendication 4 ou 5, caractérisée en ce que le réceptacle (1) comporte une pince (34) pour maintenir l'extrémité ouverte (6, 32) du paquetage (2, 3, 4, 25).

7. Disposition d'un paquetage selon l'une des revendications 1 à 3, caractérisée en ce que le paquetage (2, 3, 4, 25) est fixé sans réceptacle directement au plafond (25) ou à une paroi (27a).

8. Disposition selon la revendication 7, caractérisée en ce que l'extrémité ouvrante du paquetage (2, 3, 4, 25) est maintenue au plafond (27) ou à la paroi (27a) par un ruban (11).

9. Disposition selon la revendication 7 ou 8, caractérisée en ce que l'extrémité ouvrante du paquetage (2, 3, 4, 25) est maintenue par une pince (34).

FIG. 1

SCHNITT Ⅲ-Ⅲ

14    1

2

11

13,13a

14      5

FIG. 3

14       1        Ⅲ

11

SCHWIMMWESTE

16

5    14

13

13a

FIG. 2     Ⅲ

1

2

SCHWIMMWESTE

11

16

13

FIG. 4

14

15

1

2

SCHWIMMWESTE

13

FIG. 5

13a

14

15

9

1

11

9

13

FIG. 6

17

SCHWIMMWESTE

2

6

14

15

1

11

9

13

FIG. 7

14

17

SCHWIMMWESTE

2

6

14

15

11

FIG. 8

SCHNITT IX-IX

1

24

14

14

14

19a

19

19b

FIG. 9

SCHNITT X-X

FIG. 10

FIG. 13

FIG. 12

FIG. 11